Europäisches Patentamt

European Patent Office

Office européen des brevets

(11) Publication number: **0 362 153**
**A2**

## (12) EUROPEAN PATENT APPLICATION

(21) Application number: 89830384.7

(51) Int. Cl.5: **C09D 5/00** , **C09D 121/00**

(22) Date of filing: **08.09.89**

(30) Priority: **23.09.88 IT 4013988**

(43) Date of publication of application:
**04.04.90 Bulletin 90/14**

(84) Designated Contracting States:
**AT CH DE FR LI NL**

(71) Applicant: **MODENFIX S.r.L.**
**Via della Stazione Zona Industriale 1**
**I-41042 Fiorano Modenese (Modena)(IT)**

(72) Inventor: **Palandri, Gianfranco**
**Via Aquini 180/1**
**I-41100 Modena(IT)**
Inventor: **Sighinolfi, Riccardo**
**Via Viterbo, 15**
**I-41100 Modena(IT)**

(74) Representative: **Lanzoni, Luciano**
**c/o BUGNION S.p.A. Viale Trento Trieste, 25**
**I-41100 Modena(IT)**

(54) **A product enabling the application of a removable protective coating to floors and similar surfaces.**

(57) A product with which to form a removable protective coating, applicable to floors and similar surfaces, consists in a fluid mixture of greater or lesser density comprising substantial proportions of dry natural or synthetic rubber, mineral fillers and water, and marginal quantities of thickeners, additives and liquid ammonia; when spread over a surface requiring protection, the rubber solution solidifies into a clinging protective film that is easily stripped away.

EP 0 362 153 A2

## A product enabling the application of a removable protective coating to floors and similar surfaces

The present invention relates to a product designed for application to floors and to other similar surfaces, by means of which to form a removable coating for the protection of such surfaces. Such a product serves specifically, though by no means exclusively, to create a strong protective coating for the finished surfaces of floors and stairs etc., in buildings either under construction or undergoing renovation, with the combined purpose in view of permitting pedestrian traffic over the surfaces and safeguarding them from any possible damage at one and the same time.

Likewise with the purpose in view of providing a protective coating, the product disclosed can be applied to the surfaces of hardware in general, and of sanitary ware in particular, in readiness for removal at an opportune moment, e.g. following installation.

Thus, the question to which the present invention is addressed essentially concerns the provision of coatings, applied and removable with equal ease and capable of protecting surfaces that become subject to a potentially damaging use before being exposed ultimately to the use for which they are intended. Currently, new flooring surfaces in buildings under construction are protected temporarily using any means that fall conveniently to hand, and in most instances, simply by laying down sheets of plastic, paper etc.

The protection afforded by such means is limited, however, inasmuch as the sheets in question are simply positioned loosely over the surface; on the one hand, total protection of the finish cannot be guaranteed, as grains of dirt and liquids penetrate easily between the plastic or paper sheet and the surface beneath, whilst on the other, the temporary covering tends to compromise the ease of access normally afforded by the floor, stairs or whatever, due to the very nature of the loose sheet material. Accordingly, the object of the present invention is to overcome the drawbacks and shortcomings of such conventional expedients.

The stated object is realized by way of a product with which to create a removable protective coating applicable to floors and other similar surfaces, which is characterized in that it consists in a fluid mixture of greater or lesser density which, when spread over the surface, solidifies into a clinging protective film; such a mixture comprises:

| -natural or synthetic rubber (dry state) | 20-50% |
|---|---|
| -thickeners | 1-4% |
| -mineral fillers | 20-40% |
| -water | 20-40% |
| -additives | 1-4% |
| -liquid ammonia | <1% |

A first advantage of the invention is that of the ease with which the fluid product can be applied to surfaces of any given shape.

Further advantages of the invention derive from the mechanical properties of the film once solidified over a surface, which enable the fulfilment of an efficient protective action in the face of external stresses to which the surface becomes subject.

Another advantage of the present invention is that it permits of ensuring just sufficient adhesion between the fluid mixture and the surface over which solidification occurs, following application, to facilitate subsequent removal of the film.

A preferred embodiment of the invention will now be described in detail, by way of example.

A product according to the invention consists in a fluid mixture, of greater or lesser density, which is formulated thus·

| | |
|---|---|
| -natural or synthetic rubber (dry state) | 20-50% |
| -thickeners | 1-4% |
| -mineral fillers | 20-40% |
| -water | 20-40% |
| -additives (antifoaming, antifermentation, dispersant & wetting agents) | 1-4% |
| -liquid ammonia | <1% |

The fluid mixture is spread over a surface to be protected, for example, using a trowel or float, to a thickness which for normal applications would be between a few tenths of a millimetre, at least, and a few millimetres at most. Following application, exposure to the surrounding air causes the water content to evaporate, whereupon the layer of dry material hardens progressively, clinging to the surface. More exactly, the solidifying film boasts properties of notable flexibility and cohesiveness, and therefore provides an ideal means of protecting the surface, to which it now clings firmly, from the mechanical aggression typically generated by pedestrian traffic on floors, staircases and other comparable structures.

The fact that the initial consistency of the product is paste-like, hence fluid to a greater or lesser degree, signifies that no difficulties are experienced with application, even to surfaces of complex shape.

The solidified protective coating is removed in simple fashion, exploiting the flexibility and cohesiveness of the film and the 'just sufficient' adhesion between film and surface. In practice, the operation will be accomplished by lifting a part of the film, say, near to one edge, and pulling away in such a manner that the entire coating separates from the surface in a single piece.

The product disclosed is advantageous inasmuch as it can be applied to differing types of surface; besides clinging firmly to regularly used flooring materials (marble, stone, timber, ceramic tiles), the formulation is equally suitable for application to metal and plastic surfaces. In a wider context, the product lends itself to use as a removable protective coating for the most disparate range of items.

**Claims**

A product enabling the creation of a removable protective coating applicable to the surfaces of floors and similar structures,
characterized
in that it consists in a fluid mixture of greater or lesser density, comprising:

| | |
|---|---|
| -natural or synthetic rubber (dry state) | 20-50% |
| -thickeners | 1-4% |
| -mineral fillers | 20-40% |
| -water | 20-40% |
| -additives (antifoaming, antifermentation, dispersant & wetting agents) | 1-4% |
| -liquid ammonia | <1% |

which, when spread over a surface, solidifies to form a clinging protective film.